(19) Europäisches Patentamt
European Patent Office
Office européen des brevets

(11) Veröffentlichungsnummer: **0 325 686 B1**

(12) **EUROPÄISCHE PATENTSCHRIFT**

(45) Veröffentlichungstag der Patentschrift: **27.12.91**

(51) Int. Cl.⁵: **B01J 2/22**, B30B 11/18, C01D 3/22

(21) Anmeldenummer: **88111370.8**

(22) Anmeldetag: **15.07.88**

(54) **Walzenpresse zum Verpressen von feinkörnigen Chemikalien, insbesondere Salzen, zu Schülpen.**

(30) Priorität: **26.01.88 DE 3802173**

(43) Veröffentlichungstag der Anmeldung:
**02.08.89 Patentblatt 89/31**

(45) Bekanntmachung des Hinweises auf die Patenterteilung:
**27.12.91 Patentblatt 91/52**

(84) Benannte Vertragsstaaten:
**DE ES FR GB**

(56) Entgegenhaltungen:
**FR-A- 2 108 288**
**FR-A- 2 426 564**

(73) Patentinhaber: **Maschinenfabrik Köppern GmbH. & Co. KG**
**Königsteiner Strasse 2-12**
**W-4320 Hattingen 1(DE)**

(72) Erfinder: **Bergendahl, Hans-Georg, Dipl.-Ing.**
**Nevelstrasse 32**
**W-4630 Bochum(DE)**
Erfinder: **Zech, Kurt, Dipl.-Ing.**
**Ackerstrasse 8**
**W-4750 Unna(DE)**
Erfinder: **Zisselmar, Raimund, Dr.-Ing.**
**Eifelstrasse 118**
**W-5042 Erftstadt(DE)**

(74) Vertreter: **Gralfs, Harro, Dipl.-Ing.**
**Am Bürgerpark 8**
**W-3300 Braunschweig(DE)**

## Beschreibung

Die Erfindung bezieht sich auf eine Walzenpresse nach dem Oberbegriff des Patentanspruches 1.

Walzenpressen der genannten Art werden verwendet bei einem Verfahren, das in der DE-A 2,824,827 = US-A 4,439,384 beschrieben ist. Bei diesem Verfahren wird das Preßgut mit einer Temperatur größer als 125° aufgegeben, und die Walzenfläche wird auf einer Temperatur kleiner 80° gehalten. Mit diesem Verfahren lassen sich bei feinkörnigen Salzen mit üblicher Siebkennlinie hochfeste Schülpen erzeugen, aus denen durch Zerkleinerung Granulat mit hoher Abriebsfestigkeit herstellbar ist.

Es ist allgemein bekannt (DE-B 12 50 799; Zeitschrift "Aufbereitungstechnik", 1967, Nr. 2, Seiten 80 bis 84), daß Probleme bei der Verpressung von feinkörnigen Salzen, insbesondere Kalisalzen, besonders darin liegen, daß das der Walzenpresse zugeführte Gut, das einen hohen Luftanteil hat, bei der Kompaktierung in der Walzenpresse mit zunehmender Feinkörnigkeit des zu verpressenden Salzes zunehmende Schwierigkeiten hinsichtlich der Entlüftung des Salzes verursacht. So ist es bekannt, daß auf Glattwalzenpressen mit üblicher Walzenlänge keine durchgehenden Schülpen entstehen, sondern als Optimum in Umfangsrichtung verlaufende Schülpenbänder, zwischen denen sich Bereiche unverdichteten bzw. nur gering verdichteten Materials befinden.

Walzenpressen für die Kompaktierung von feinkörnigen Salzen werden normalerweise mit relativ großer Breite geliefert, wobei die Arbeitsbreite normalerweise dem Walzendurchmesser entspricht, vorzugsweise aber größer ist als diese. So sind beispielsweise für die Kompaktierung von feinkörnigen Salzen Walzenpressen üblich mit Walzendurchmessern von 1000 mm und einer Arbeitsbreite von 1250 mm. Bei einer solchen Presse sind dabei fünf Schneckenförderer vorgesehen, die mit ihren Ausgängen in Achsrichtung der Walzen nebeneinander liegen und abwechselnd gegen die senkrechte Ebene durch den Walzenspalt geneigt sind. Bei feinkörnigen Salzen mit einer Siebkennlinie mit 75 bis 85 % kleiner 0,4 mm (35 mesh) und 40 % kleiner 0,2 mm (65 mesh) lassen sich mit solchen Walzenpressen auch bei wesentlicher Erhöhung der Preßkraft nur Schülpen unzureichender Qualität erzeugen. So wurden beispielsweise bei einer Preßkraft, die wesentlich über der normalen Preßkraft von 45 bis 55 kN/cm Walzenbreite liegt, und einer Stromaufnahme von 110 bis 130 A Schülpen erzeugt, aus denen etwa 25 to verkaufsfähiges Granulat herstellbar war.

Aufgabe der Erfindung ist es, eine Walzenpresse der gattungsgemäßen Art so auszugestalten, daß mit ihr auch sehr feinkörnige Salze so kompaktierbar sind, daß bei niedriger Stromaufnahme Schülpen hoher Qualität erzeugbar sind, aus denen hochabriebsfestes Granulat herstellbar ist.

Diese Aufgabe wird gemäß der Erfindung gelöst durch die im Kennzeichen des Patentanspruches 1 herausgestellten Merkmale.

Zweckmäßige Ausgestaltungen sind Gegenstand der Unteransprüche.

Die Erfindung ist in der Zeichnung beispielsweise veranschaulicht und im nachstehenden im einzelnen anhand der Zeichnungen beschrieben. In dieser zeigen:

Fig. 1 einen Schnitt durch eine Walzenpresse längs der Linie I-I in Fig. 2,

Fig. 2 einen Schnitt durch eine Walzenpresse längs der Linie II-II in Fig. 1,

Fig. 3 in größerem Maßstab eine Teilansicht einer Preßwalze.

Die in der Zeichnung dargestellte Walzenpresse ist für das Kompaktieren von sehr feinkörnigen Chemikalien, insbesondere Salzen wie beim Flotationsverfahren anfallenden Kaliksalzen, bestimmt und im nachstehenden in Verbindung mit der Kompaktierung von extrem feinkörnigen Kalisalzen beschrieben. Sie ist in ihrem Grundaufbau von bekannter Art. Die Walzenpresse weist nebeneinander zwei synchron angetriebene Preßwalzen 2, 4 auf, die in üblicher Weise in einem Pressengestell 6 gelagert sind. Die Preßwalzen sind dabei mit Walzenzapfen an ihren Enden in Lagergehäusen 8 gelagert, die zwischen einem oberen und einem unteren Rahmenträger angeordnet sind, wobei eine der Preßwalzen mit ihren Lagergehäusen gegen eine vorgespannte Feder von der anderen Walze weg verschiebbar ist.

Die Preßwalzen 2, 4 sind jeweils mit zwei in axialen Abstand angeordneten zylindrischen Preßflächen 28, 28A versehen, an die sich jeweils radiale quer zur Drehachse liegende Schultern 27, 29; 27A, 29A anschließen. Die Preßflächen können außen auf zylindrischen Ringen ausgebildet sein, die auf den Walzenkörper aufgeschrumpft sind. Sie können aber auch ringförmig integral mit dem Walzenkörper ausgebildet sein. Die Beschreibung bezieht sich im folgenden auf die Ausführung mit aufgeschrumpften Ringen.

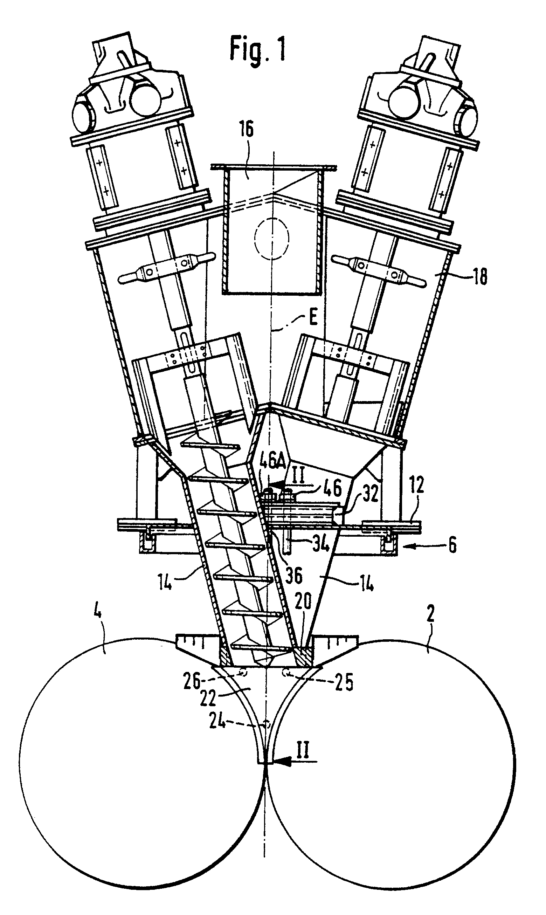

Zwischen den beiden oberen Rahmenträgern 10, 10A ist eine Brücke 12 angeordnet, auf der, wie in Fig. 1 dargestellt, Schneckenförderer angeordnet sind, deren Schneckengehäuse die für jeden Schneckenförderer gesonderten Füllschächte 14 bilden, über die das Gut in den Walzenspalt gefördert wird. Die Füllschächte 14 liegen in Achsrichtung unmittelbar aneinander. Die Schneckenförderer sind gegen die Ebene E, die senkrecht durch den Walzenspalt geht, abwechselnd entgegengesetzt geneigt. Einzelheiten der Schneckenförderer sind bekannt.

Das zu kompaktierende Salz gelangt über einen Einlaß 16 in einen Zwischenbunker 18, aus dem die Schneckenförderer das Material entnehmen. Die Förderschnecken liegen jeweils an für jede Förderschnecke gesonderten Füllschächten. Die Enden der Füllschächte 14 sind in einer Platte 20 angeordnet, die den Walzenspalt nach oben dichtend abschließt.

An den Enden der Preßflächen 28, 28A der Walzen 2 und 4 sind die Walzenspalte jeweils beidseitig in Achsrichtung abschließende keilförmige Wandelemente 22, 22A vorgesehen, die stirnseitig gegen die voneinander abgewandten Schultern 27, 27A der Ringe 28, 28A anliegen. Diese keilförmigen Wandelemente 22, 22A werden durch horizontale Druckbolzen 24, 25, 26 bzw. 24A, 25A, 26A, die im Bereich zwischen den Lagergehäusen 8 in dem Pressenrahmen 6 gehalten sind, gegen die Schultern 27, 27A angepreßt.

Gegen die einander zugewandten Schultern 29, 29A der beiden Ringe 28, 28A liegen zwei weitere keilförmige Wandelemente 30, 30A an. Zum Anpressen dieser weiteren keilförmigen Wandelemente 30, 30A sind in einer quer zur Brücke 12 auf dieser angeordneten Brücke 32 nebeneinander drei Zugstangen 34, 35, 36 gelagert, von denen in Fig. 1 die Zugstangen 34 und 36 mit ihren oberen Enden angedeutet sind. Die Zugstangen 34 und 35 sind vorzugsweise in gleichen Abstand von der Ebene E angeordnet wie die horizontalen Druckbolzen 25 und 26. Die in der senkrecht durch den Walzenspalt verlaufenden Ebene E liegende Zugstange 36 trägt an ihrem unteren Ende einen keil- oder konusförmigen Kragen 38, der mit entsprechenden Konus- oder Keilflächen 40, 40A an den Außenseiten der beiden keilförmigen Wandelemente 30, 30A in deren unterem Bereich zusammenwirkt. Die beiden äußeren Zugstangen 34, 35 sind jeweils mit entsprechenden konischen oder keilförmigen Kragen 42, 42A versehen, die mit entsprechenden Konus- oder Keilflächen 44, 44A im oberen Bereich der keilförmigen Wandelemente 30, 30A zusammenwirken. Die Anpressung wird durch senkrechtes Verstellen der Zugstangen 34, 36 mittels auf der Oberseite der Brücke 32 aufliegender Muttern 46, 46A bewirkt. Die Zugstangen 34, 35 mit ihren Kragen 42, 42A erfüllen damit die Funktionen der Druckbolzen 26, 26A während die Zugstange 36 mit ihrem Kragen 38 die Funktion des Druckbolzens 24 erfüllt. Anstelle der Zugstangen können auch Druckstangen mit entsprechend angeordneten keil- oder konusförmigen Kragen vorgesehen sein.

Durch die beiden axial im Abstand voneinander liegenden Ringe 28, 28A wird die gesamte Breite B des Walzenkörpers in zwei Arbeitsbreiten b aufgeteilt. Dabei beträgt B beispielsweise 2,5 b, wobei der Zwischenraum zwischen den beiden Ringen dann eine Breite b/2 aufweist.

Ausgehend von einer üblichen Walzenpresse mit einer Breite B der Preßflächen der Walzenkörper von beispielsweise 1250 mm ist durch die beschriebene Ausbildung die effektive Arbeitsbreite der beiden Walzen 2 und 4 reduziert auf zwei b. Bei einem Zwischenraum zwischen den beiden Ringen mit einer Breite von b/2 bedeutet dies eine Reduzierung der effektiven Arbeitsbreite um 20 %.

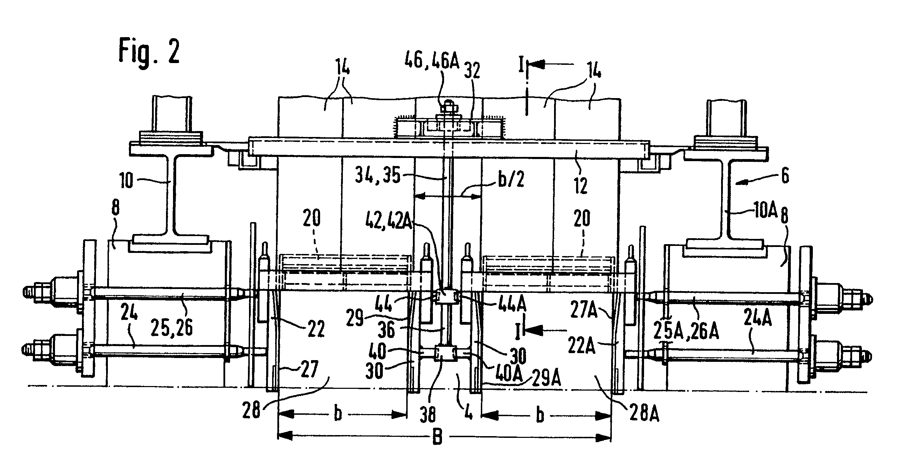

Jedem der beiden Ringe 28, 28A sind zwei Schneckenförderer zugeteilt, deren Füllschächte 14 in Fig. 2 schematisch angedeutet sind. Die Brücke 32 liegt hierbei, wie in Fig. 1 dargestellt, zwischen den beiden benachbarten mittleren Füllschächten 14 der Schneckenförderer.

Bei einer Walzenpresse, die mit einer Arbeitsbreite B gleich dem oder größer als der Durchmesser der Preßflächen wie üblich für eine Preßkraft von beispielsweise 55 kN/cm ausgelegt ist, lassen sich mit zwei Ringen 28, 28A mit jeweils einer Arbeitsbreite b gleich 0,4 B dementsprechend höhere Preßkräfte erreichen, genau gesagt eine Preßkraft, die 20 % höher liegt als die erwähnten 55 kN/cm, also Preßkräfte von etwa 66 kN/cm bei gleicher Pressenbelastung.

Bei Vergleichsversuchen zwischen einer Walzenpresse mit einem Walzendurchmesser von 1000 mm und einer Arbeitsbreite B gleich 1250 mm und mit fünf Schneckenförderern - Walzenpresse A - und einer Walzenpresse der oben beschriebenen Ausbildung - Walzenpresse B - mit einer gesamten Arbeitsbreite der beiden Ringe von 0,8 B und vier Schneckenförderern mit jeweils gleicher Leistung wie die Schneckenförderer der Walzenpresse A wurde festgestellt, daß mit der Walzenpresse B bei Preßkräften im Auslegungsbereich der Walzenpresse A, also in der Größenordnung von 66 kN/cm, eine wesentliche höhere Produktionsleistung an verkaufsfähigem Granulat erreichbar ist bei wesentlich verringerter Stromaufnahme und wesentlicher Verbesserung der Schülpe. So wurden mit der neuen Ausbildung ohne Schwierigkeiten kontinuierliche, gleichmäßig durchgepreßte Schülpen mit einer Schülpendicke von 15 bis 16 mm erzeugt, die zu Granulat führt, das eine hohe Abriebsfestigkeit hat.

Mit der Walzenpresse A wurden bei bis die Sicherheitsgrenze gesteigerten Preßkräften Schülpen erzeugt, aus denen etwa 25 to/h verkaufsfähiges Granulat herstellbar war. Dabei wurde eine Stromaufnahme von 110 bis 130 A gemessen. Bei der erfindungsgemäß ausgebildeten Walzenpresse B wurden Schülpen erzeugt, aus denen 35 to/h verkaufsfähiges Granulat herstellbar war, bei einer Stromaufnahme der Walzenpresse von 60 bis 70 A. Es wurde also eine 20 %ige Erhöhung der Produktionsleistung bezogen auf das Granulat bei einer nahezu halbierten Stromaufnahme erzielt. Die erfindungsgemäß ausgebildete Presse B zeichnete sich dabei durch einen sehr ruhigen Lauf aus. Die Erhöhung der Produktionsleistung bezogen auf das Granulat wurde dabei erreicht trotz Wegfall eines der Schnekkenförderer und der damit verbundenen Minderung der installierten Förderleistung um 20 %.

Die Vergleichsversuche wurden durchgeführt mit sehr feinkörnigem Kalisalz mit einer Siebkennlinie 75 bis 85 % kleiner 0,4 mm (35 mesh) und 40 % kleiner 0,2 mm (65 mesh).

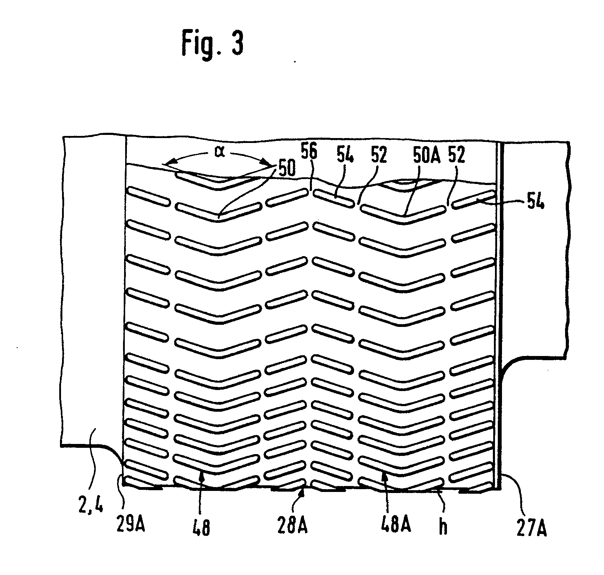

Bei den Vergleichsversuchen war bei der Walzenpresse A die Preßfläche mit einer flachen Waffelprofilierung versehen mit einer Profiltiefe von 5 mm. Die Walzenpresse B war auf den Preßflächen mittels aufgeschweißter Rippen profiliert, wie sie in Fig. 3 dargestellt sind. Die Profilierung weist hierbei in Umlaufrichtung der Walze, die der Förderleistung entspricht und hier von oben nach unten gerichtet ist, pfeilförmige unterbrochene Rippen 48 auf. Die in Umlaufrichtung vorn liegenden Pfeilspitzen 50 sind hierbei vorzugsweise geschlossen ausgebildet. An die Schenkel dieser Pfeilspitzen 50 schließen sich über Unterbrechungen 52 Schenkelabschnitte 54 an, zwischen deren hinteren Enden Unterbrechungen 56 vorgesehen sind. Vorzugsweise liegen nebeneinander zwei derartige Profilabschnitte 48, 48A mit jeweils einer Pfeilspitze 50, 50A, die identisch ausgebildet sind und deren Schenkel 54 jeweils an ihren einander zugewandten Enden an eine Unterbrechung 56 angrenzen. Die außen liegenden Schenkel 54 liegen dabei vorzugsweise in einem geringen Abstand von den Schultern 27, 27A bzw. 29, 29A an den Enden der Ringe, so daß auch hier ein Zwischenraum zwischen diesen Schenkeln und den den Walzenspalt abschließenden Wandelementen 22, 22A bzw. 30, 30A besteht.

Die auf die Preßflächen mittels Auftragsschweißung aufgebrachten Rippen haben eine Höhe h von etwa 3 mm. Der Spitzenwinkel $\alpha$ liegt vorzugsweise in der Größenordnung zwischen 130° und 150°, und beträgt zweckmäßigerweise etwa 140°.

Durch die beschriebene Anordnung wird die in dem Material eingeschlossene Luft an den pfeilförmigen Rippen entlang seitwärts und nach hinten verdrängt, wobei sie über die Durchbrüche 52, 56 der Rippen entweichen kann. Dies führt zu einer wesentlichen Unterstützung der Entlüftung des Materials, die zur Bildung einer sehr gleichmäßig durchgepreßten Schülpe hoher Qualität wesentlich beiträgt.

**Patentansprüche**

1. Walzenpresse zum Verpressen von feinkörnigen Chemikalien, insbesondere Salzen, mit einer Siebkennlinie mit 75 % kleiner 0,4 mm und 40 % kleiner 0,2 mm, zu Schülpen mit

synchron angetriebenen Preßwalzen (2, 4), die horizontal nebeneinander angeordnet sind, deren Walzenkörper für eine Arbeitsbreite von größer als 1000 mm ausgelegt sind und deren Preßflächen (28, 28A) profiliert sind, mit Schneckenförderern zum Einspeisen des Salzes in den Walzenspalt,

den Walzenspalt beidseitig in Achsrichtung abschließenden keilförmigen Wandelementen (22, 22A; 30, 30A), die im Umfangsbereich stirnseitig gegen axiale Schultern (27, 29; 27A, 29A) an den Enden der Preßflächen anliegen, und

achsparallel wirkenden Anpreßelementen (24, 25, 26; 24A, 25A, 26A) für die Wandelemente,

dadurch gekennzeichnet,

daß die Walzen (2, 4) in axialem Abstand voneinander jeweils zwei Preßflächen (28, 28A) aufweisen, die beidseitig mit axialen Schultern (27, 29; 27A, 29A) versehen sind, an denen jeweils beidseitig die Walzenspalte in Achsrichtung abschließende keilförmige Wandelemente (22, 22A; 30, 30A) anliegen,

daß jedem Walzenspalt wenigstens ein Schneckenförderer zugeordnet ist, und

daß zur Anpressung der keilförmigen Wandelemente (22, 22A) gegen die einander gegenüberliegenden Schultern (29, 29A) der beiden Preßflächen (28, 28A) verstellbare Zug- oder Druckstangen (34, 36) vorgesehen sind, die im Bereich der Wandelemente mit konischen oder keilförmigen Flächen (38, 42, 42A) versehen sind, die mit entsprechenden Konus- oder Keilflächen (40, 44, 44A) an den Außenseiten der Wandelemente (22, 22A) zusammenwirken.

2. Walzenpresse nach Anspruch 1, dadurch gekennzeichnet, daß die Preßflächen (28, 28A) die Außenflächen von auf die Preßwalzen (2, 4) aufgeschrumpften Ringen sind.

3. Walzenpresse nach Anspruch 1, dadurch gekennzeichnet, daß die Profilierung (48, 48A) in Umlaufrichtung pfeilförmige, unterbrochene Rippen (50, 54) aufweist.

4. Walzenpresse nach Anspruch 3, dadurch gekennzeichnet, daß die Profilierung (48, 48A) jeweils in Achsrichtung zickzackförmig angeordnete Rippen (50, 54) mit zwei im Abstand liegenden Pfeilspitzen (50, 50A) aufweist.

5. Walzenpresse nach Anspruch 3 oder 4, dadurch gekennzeichnet, daß die Profilierung (48, 48A) mit Rippen (50, 54) versehen ist, die in ihrem in Umlaufrichtung vorlaufenden Bereich als geschlossene Pfeilspitzen (50) ausgebildet sind.

6. Walzenpresse nach Anspruch 3, 4 oder 5, dadurch gekennzeichnet, daß der Spitzenwinkel der Pfeilspitzen zwischen 130° und 150° beträgt.

7. Walzenpresse nach Anspruch 3, 4, 5 oder 6, dadurch gekennzeichnet, daß die Rippen (50, 54) als Auftragsschweißungen auf den Preßflächen (28, 28A) ausgebildet sind.

8. Walzenpresse nach einem der Ansprüche 3 bis 7, dadurch gekennzeichnet, daß die Rippen (50, 54) eine Höhe h von etwa 3 mm haben.

9. Walzenpresse nach einem der vorhergehenden Ansprüche, dadurch gekennzeichnet, daß die Preßflächen (28, 28A) in Achsrichtung eine Breite von etwa 450 bis 550 mm haben und daß jedem zwischen zwei Preßflächen (28, 28A) gebildeten Walzenspalt zwei Schneckenförderer mit gesonderten Füllschächten (14) zugeordnet sind.

**Claims**

1. A roll press for pressing fine-grain chemicals, more particularly salts, having a mesh characteristic with 75% smaller than 0.4 mm and 40% smaller than 0.2 mm, into agglomerations having
synchronously driven pressing rolls (2,4), which are arranged horizontally adjacent, their roll bodies being designed for an operating width of greater than 1000 mm and the pressing surfaces (28, 28A) being profiled, with screw conveyers for feeding in the salt into the roll gap, wedge-shaped wall elements (22, 22A; 30, 30A) which terminate the roll gap on both sides in an axial direction, which abut the ends of the pressing surfaces in the peripheral region at the end faces against axial shoulders (27, 29; 27A, 29A) and axially parallel-acting pressing elements (24, 25, 26; 24A 25A, 26A) for the wall elements,

**characterised in that**

the rolls (2,4) each have two pressing surfaces (28, 28A) at an axial spacing from each other, said surfaces being provided on both sides with axial shoulders (27, 29; 27A, 29A), which in each case on both sides wedge-shaped wall elements (22, 22A; 30, 30A) terminating the roll gaps axially abut,
that at least one screw conveyer is associated with each roll gap, and
that for pressing the wedge-shaped wall elements (22, 22A) against the opposite shoulders (29, 29A) of the two pressing surfaces (28, 28A) there are provided adjustable draw or thrust rods (34, 36) which are provided in the region of the wall elements with conical or wedge shaped surfaces (38, 42, 42A) which cooperate with corresponding cone or wedge surfaces (40, 44, 44A) on the outsides of the wall elements (22, 22A).

2. A roll press according to claim 1, **characterised in that** the press surfaces (28, 28A) are the outer surfaces of rings which are shrunk on to the pressing rolls (2,4)

3. A roll press according to claim 1, **characterised in that** the shaping (48, 48A) has arrow-shaped interrupted ribs (50, 54) in the direction of rotation.

4. A roll press according to claim 3, **characterised in that** the shaping (48, 48A) has in each case zig zag shaped ribs (50, 54) in an axial direction with two arrow tips (50, 50A) lying at a spacing.

5. A roll press according to claim 3 or 4, **characterised in that** the shaping (48, 48A) is provided with ribs (50, 54) which are formed in their region preceding in the direction of rotation as complete arrow tips (50).

6. A roll press according to claim 3, 4 or 5, **characterised in that** the tip angle of the arrow tips is between 130 degrees and 150 degrees.

7. A roll press according to claim 3, 4, 5 or 6, **characterised in that** the ribs (50, 54) are formed as surface-layer weldings on to the pressing surfaces (28, 28A).

8. A roll press according to any one of claims 3 to 7, **characterised in that** the ribs (50, 54) have a height h of about 3 mm.

9. A roll press according to any one of the preceding claims, **characterised in that** the pressing surfaces (28,28A) have a width of about 450 to 550 mm in an axial direction and that two screw conveyers with separate filling shafts (14) are associated with each roll gap formed between two pressing surfaces (28, 28A).

**Revendications**

1. Presse à rouleaux pour comprimer des produits chimiques de fine granulométrie, des sels notamment, présentant une caractéristique de criblage comportant 75% inférieurs à 0,4 mm et 40% inférieurs à 0,2 mm, sous forme d'écailles, comportant,

des rouleaux à entraînement synchrone (2,4) placés horizontalement côte à côte, dont les corps recouvrent une largeur de travail supérieure à 1000 mm et dont les surfaces de compression (28,28A) sont profilées, pourvus de vis d'alimentation servant à l'amenée du sel dans l'écartement des rouleaux,

des éléments de paroi (22,22A;30,30A) en forme de coin obturant l'écartement des rouleaux des deux côtés en direction axiale et qui sont situés frontalement dans la zone périphérique contre des épaulements axiaux (27,29;27A,29A) aux extrémités des surfaces de compression, et

des éléments de compression (24,25,26;24A,25A,26A) pour les éléments de paroi, agissant parallèlement à l'axe, caractérisée en ce que

les rouleaux (2,4) présentent, à distance axiale l'une de l'autre, respectivement deux surfaces de compression (28, 28A), qui sont pourvues des deux côtés d'épaulements axiaux 27,29;27A,29A), contre lesquels viennent des éléments de paroi (22,22A;30,30A) en forme de coin obturant les écartements de rouleaux respectivement des deux côtés en direction axiale,

en ce qu'une vis d'alimentation au moins est affectée à chaque écartement de rouleaux et

en ce que, pour comprimer les éléments de paroi (22,22A) en forme de coin contre les épaulements (29,29A), se faisant face mutuellement, des deux surfaces de compression (28,28A), sont prévues des tiges de traction ou de compression (34,36), qui, dans la zone des éléments de paroi, sont pourvues de surfaces coniques ou en coin (38,42,42A), qui coopèrent avec des surfaces coniques ou en coin (40,44,44A) correspondantes des faces externes des éléments de paroi (22,22A).

2. Presse à rouleaux selon la revendication 1, caractérisée en ce que les surfaces de compression (28,28A) sont les surfaces extérieures de couronnes emmanchées par frettage sur les rouleaux de presse (2,4).

3. Presse à rouleaux selon la revendication 1, caractérisée en ce que les profils (48,48A) présentent dans le sens de rotation des nervures interrompues (50,54) en forme de flèches.

4. Presse à rouleaux selon la revendication 3, caractérisée en ce que les profils (48,48A) présentent respectivement des nervures (50,54) placées en zigzag en direction axiale comportant deux flèches (50,50A) à distance.

5. Presse à rouleaux selon la revendication 3 ou 4, caractérisée en ce que les profils (48,48A) sont pourvus de nervures (50,54), qui, dans leur zone allant vers l'avant dans la direction de rotation, ont une configuration de pointes de flèches fermées (50).

6. Presse à rouleaux selon la revendication 3, 4 ou 5, caractérisée en ce que l'angle des pointes de flèches s'élève de 130 à 150°.

7. Presse à rouleaux selon la revendication 3, 4, 5 ou 6, caractérisée en ce que les nervures (50,54) sont rapportées par soudure sur les surfaces de compression (28,28A).

8. Presse à rouleaux selon l'une des revendications 3 à 7, caractérisée en ce que les nervures (50,54) ont une hauteur $\underline{h}$ d'environ 3 mm.

9. Presse à rouleaux selon l'une des revendications précédentes, caractérisée en ce que les surfaces de compression (28,28A) ont, en direction axiale, une largeur d'environ 450 à 550 mm et en ce qu'à chaque écartement de rouleaux constitué entre deux surfaces de compression (28,28A) sont associées au moins deux vis d'alimentation comportant des puits de remplissage séparés (14).

# Fig. 1

Fig. 2

# Fig. 3